# EUROPEAN PATENT SPECIFICATION

(11) **EP 4 036 680 B1**
(45) Date of publication and mention of the grant of the patent: **06.03.2024**
(21) Application number: 22153510.7
(22) Date of filing: 26.01.2022
(51) Int. Cl.: G05D 7/01

(54) **FLOW ADJUSTMENT DEVICE AND PLANT USING SAID DEVICE**
DURCHFLUSSREGELVORRICHTUNG UND ANLAGE MIT DIESER VORRICHTUNG
DISPOSITIF DE RÉGLAGE DE DÉBIT ET INSTALLATION UTILISANT CE DISPOSITIF

(30) Priority: 27.01.2021 IT 202100001550
(43) Date of publication of application: 03.08.2022
(73) Proprietor: Cimberio Holding S.p.A., 20121 Milano (MI) (IT)
(72) Inventor: CIMBERIO, Roberto, 28010 Ameno Fraz. Vacciago (NO) (IT); GUIDETTI, Tiziano, 28021 Borgomanero (NO) (IT)
(74) Representative: PGA S.p.A.

(56) References cited:
- EP-A1- 3 513 266
- EP-B1- 2 557 365
- EP-B1- 3 513 266
- DK-A1- 201 770 613

## Description

### FIELD OF THE INVENTION

The present invention relates to a flow adjustment device suitable to guarantee a constant flow rate regardless of any pressure fluctuations upstream or downstream of the flow adjustment device. The present invention also relates to a plant, for example for underfloor heating, using said adjustment device.

### PRIOR ART

Flow adjustment devices with sensitive membrane elements are known which, on the basis of a differential pressure signal, regulate a fluid passage gap so as to control the differential pressure and/or the flow rate as the inlet or outlet pressure changes.

An example of a flow adjustment valve, described in European Patent No. EP2557365B1, comprises a containment structure having a main body engageable to an outlet manifold of a hydraulic plant, as well as a connecting element transverse to the main body and engageable to a distribution circuit, the latter configured to place in fluid communication the return manifold and a delivery manifold of the plant. The valve also includes a shutter controlled by an actuator to selectively open or close the valve, as well as a differential regulator placed in series with the shutter to regulate the flow rate through the valve according to the differential pressure between the upstream and downstream of the regulator. Although the above-described solution allows for the adjustment of the return flow on each return line to the manifold, the Applicant has found that this solution has limitations and drawbacks. In particular, the connecting element described in document EP2557365B1, allows the valve to be suitable for use in an underfloor heating plant, but introducing an additional component. This, in addition to generating the need to make a further fluid-tight coupling between the main body and the connecting element, makes the valve described here difficult to use for the retrofit of already installed manifolds, since the use of the valve in question practically requires the disassembly and replacement of the entire manifold and its associated connecting elements. Furthermore, the structural complexity of the valve, its size and the cost of its construction are further obvious drawbacks.

A further embodiment of such first example of flow adjustment valve is described by the EP Patent Application No. EP3513266A1.

A second example of a flow adjustment valve is described in PCT Patent Application No.WO2011006559A1, which shows a valve installed on a delivery manifold of an underfloor heating plant. The valve includes a valve body housed within a fitting element installed on one side of the manifold and configured to place the delivery manifold in fluid communication with a flow line terminally connected to a return manifold of the plant. In particular, the valve body has an inlet facing the inside of the delivery manifold and an outlet positioned at the outlet of the fitting element. The valve also includes a control knob, coupled to the delivery manifold in a position opposite to the valve body, connected to a pin crossing the manifold and connected to the valve body for setting the section of fluid flowing into the valve body. Eventually, a differential pressure regulator is active on a conical passage positioned at the outlet of the valve body. Although the solution described above allows a flow control on the delivery manifold, it should be noted the extreme complexity of the valve itself. Furthermore, it is evident that the valve described in WO2011006559A1 is not configured to be easily installed in existing underfloor heating plants. In fact, it should be noted that the valve in question requires a fitting element and a manifold that are specifically designed to accommodate the valve body. Furthermore, the valve in question is difficult to install, requiring access from two opposite sides of the delivery manifold. In other words, the valve described in WO2011006559A1 is unsuitable for retrofitting in existing plants and in any case requires a relatively complex installation process.

A further embodiment of the aformentioned second example of flow adjustment valve is described by the Danish Patent Application No. DK201770613A1.

### OBJECT OF THE INVENTION

The object of the present invention is therefore to solve at least one of the drawbacks and/or limitations of the previous solutions.

A first object of the invention is to provide a flow adjustment device having a simple and compact structure, which is at the same time easily installable on pre-existing domestic and/or industrial hydraulic plants.

It is also an object of the present invention to provide a flow adjustment device for setting a predetermined set point of fluid inlet flow rate.

It is then an object of the present invention to provide a device suitable to perform an automatic adjustment of the fluid inlet flow rate.

A further object of the present invention is to provide a flow adjustment device whose components are easily made by known industrial processes, for example by stamping and/or turning.

It is a further object of the present invention to provide a flow adjustment device having a high degree of reliability and requiring little maintenance.

These objects and others, which will become more apparent from the following description, are substantially achieved by a flow adjustment device and a plant according to more of the following claims.

### SUMMARY

A flow adjustment device according to the invention is disclosed in any one of claims 1-10, a delivery manifold for heating floors is disclosed in claim 11, while a hydraulic plant is disclosed in claim 13.

### BRIEF DESCRIPTION OF THE DRAWINGS

Some embodiments and aspects of the invention will be described below with reference to the accompanying drawings, provided solely for illustrative purposes and therefore not-limiting purposes:
- Figure 1 is a perspective view of the flow adjustment device according to the present invention;
- Figure 2 is a cutaway perspective view of the flow adjustment device according to the present invention;
- Figure 3 is a longitudinal sectional view of the flow adjustment device according to the present invention;
- Figures 4A and 4B are detail sectional views of a lower part of the flow adjustment device according to the present invention;
- Figure 5 is a cutaway perspective view of a delivery manifold employing the device according to the present invention;
- Figure 6 is a schematic view of a plant according to the present invention;
- Figure 7 shows in perspective view a first embodiment of a flow reducer that can be used in the flow adjustment device according to the invention; and
- Figure 8 shows in perspective view a second embodiment of a flow reducer that can be used in the flow adjustment device according to the invention.

### CONTROL UNIT

The heating and/or cooling plant described and claimed herein comprises at least one control unit 50 for controlling the operating conditions of the plant and/or controlling the process steps set out below. The control unit 50 may be a single unit or may consist of a plurality of separate control units depending on design choices and operational requirements.

The term 'control unit' means an electronic component which may comprise at least one of: a digital processor (CPU), an analogue circuit, or a combination of one or more digital processors with one or more analogue circuits. The control unit may be "configured" or "programmed" to perform certain steps: this may be accomplished in practice by any means that allows the control unit to be configured or programmed. For example, in the case of a control unit comprising one or more CPUs and one or more memories, one or more programs may be stored in appropriate memory banks attached to the CPU(s); the program(s) contain instructions which, when executed by the CPU(s), program or configure the control unit to perform the operations described in relation to the control unit. Alternatively, if the control unit is or includes analogue type circuitry, then the circuitry of the control unit may be designed to include circuitry configured, in use, to process electrical signals so as to perform the steps related to the control unit.

### DETAILED DESCRIPTION

### Flow adjustment device 1

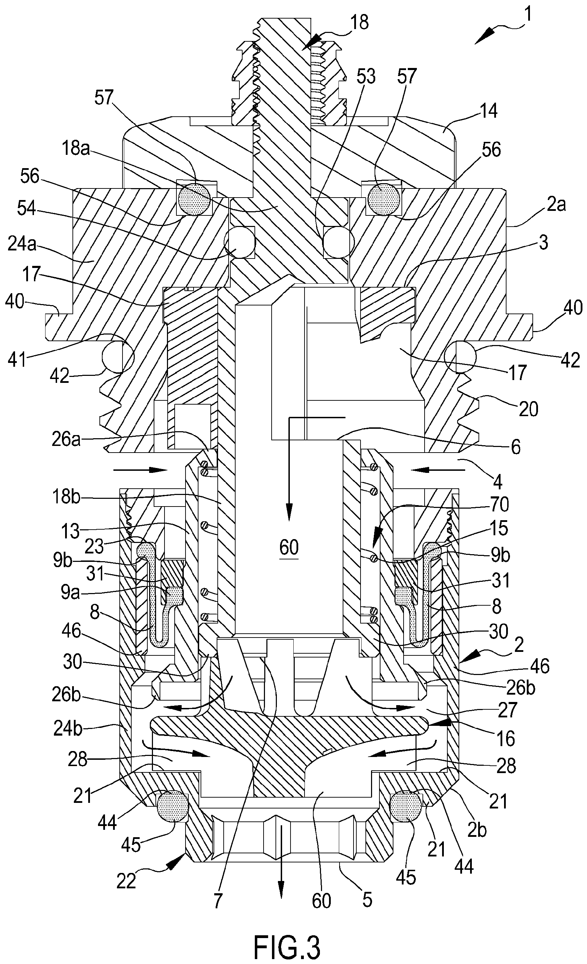

The term 1 has been generally indicated a flow adjustment device 1 for hydraulic plants, for example employable in floor heating plants, both for industrial and domestic use. The device 1 is configured to receive a fluid, in particular water, through it and to ensure a substantially constant flow rate as the inlet and/or outlet pressure changes. The device 1 comprises at least one containment structure 2 having at least one inlet 4 and at least one outlet 5. In the shown examples, the inlet 4 extends radially, while the outlet 5 is in an axial position. In particular, the containment structure 2 has a substantially cylindrical structure extending along an extension direction A (represented in figure 3 and for example coinciding with a central longitudinal axis of the containment body itself) between a first and a second end portion 2a, 2b; the second end portion 2b is at the upper part delimited by at least one top wall 3. In particular, as for example shown in figure 3, the outlet 5 of the containment structure 2 is arranged at the second end portion 2b, while the inlet 4 is arranged at an intermediate portion 2c of the containment structure, the latter extending, as already mentioned, in interposition between the first and the second end portions 2a, 2b.

The containment structure 2 may be made in two pieces engaged with each other in a fluid-tight manner. The containment structure may thus comprise at least one upper body 24a defining at least the first end portion 2a and at least one lower body 24b defining at least the second end portion 2b. In particular, in the illustrated examples, the upper body 24a defines the top wall 3, delimiting at the upper part the containment structure 2. Further, the upper body 24a may have at least one coupling portion 20, optionally threaded, arranged at the first end portion 2a, so as to detachably allow the connection of the containment structure 2 to a delivery manifold 101 of a hydraulic plant 100. In order to ensure an adequate fluid seal when coupling, for example, with a manifold, the first end portion 2a comprises a flange 40 emerging radially outwards with respect to the coupling portion 20 and delimiting with the latter a seat 41 in which a sealing member 42, for example an O-ring, may operate. In particular, the seat 41 and therefore the sealing member 42 may be arranged in the initial part of the coupling portion 20 which then continues with a threaded section.

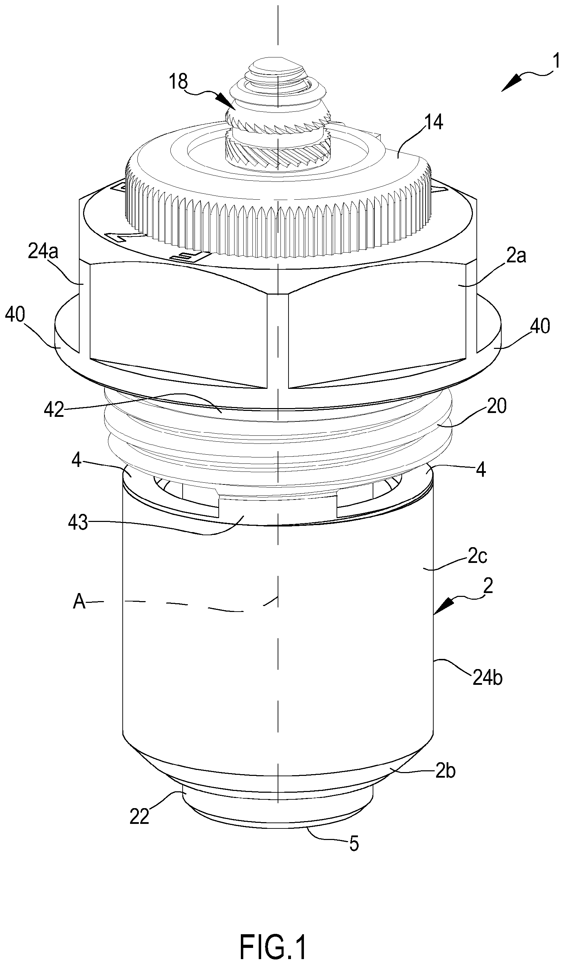

As for example shown in figure 1, on the upper body 24a at least two inlets 4 are defined which are distinct from each other and radially opposed. The two or more inlets 4 are circumferentially spaced and separated by connection sections 43, which, as can be seen from figure 1, develop substantially along the outside of the containment structure 2. In detail, the embodiment shown, has two inlets 4 each having a radial extension comprised between 15° and 179°, in particular comprised between 150° and 175°.

The lower body 24b may have a lower wall 21, longitudinally opposite the top wall 3, at which the outlet 5 of the containment structure 2 is defined. In particular, the lower body 24b may comprise at least one connection 22 extending axially from the lower wall 21, so as to define with the latter a coupling zone with a delivery manifold 101 of a hydraulic plant 100. It is worth noting that the connection 22 may be directly engaged to the delivery manifold 101 or indirectly engaged to the latter by means of a connector shank of a distribution circuit 103. In the accompanying figures, the coupling area of the connection 22 has a smooth surface. However, it cannot be excluded that the coupling area of the connection 22 may have a quick-connect portion or a threaded portion. In order to ensure adequate fluid sealing when coupling, for example, with a manifold, the lower body 24b comprises at a radially outer area of the connection 22, adjacent to the wall 21, a seat 44 in which a sealing member 45, for example an O-ring, can operate. The containment structure 2 further comprises, at the intermediate portion 2c, at least one seat 23 configured to house a differential pressure regulator 70 which will be better detailed later. In particular, the seat 23 of the containment structure is defined in interposition between the upper body 24a and the lower body 24b. However, it should be noted that the intermediate portion 2c may not be perfectly centered and shifted towards the lower portion (as in the illustrated case) or towards the upper portion of the containment structure 2.

The flow adjustment device 1 may further comprise a transmission member 18 extending inside to the containment structure for a main portion of the intermediate portion 2c, so as to define a passage 60 arranged and configured to place the inlet 4 in fluid communication with the outlet 5.

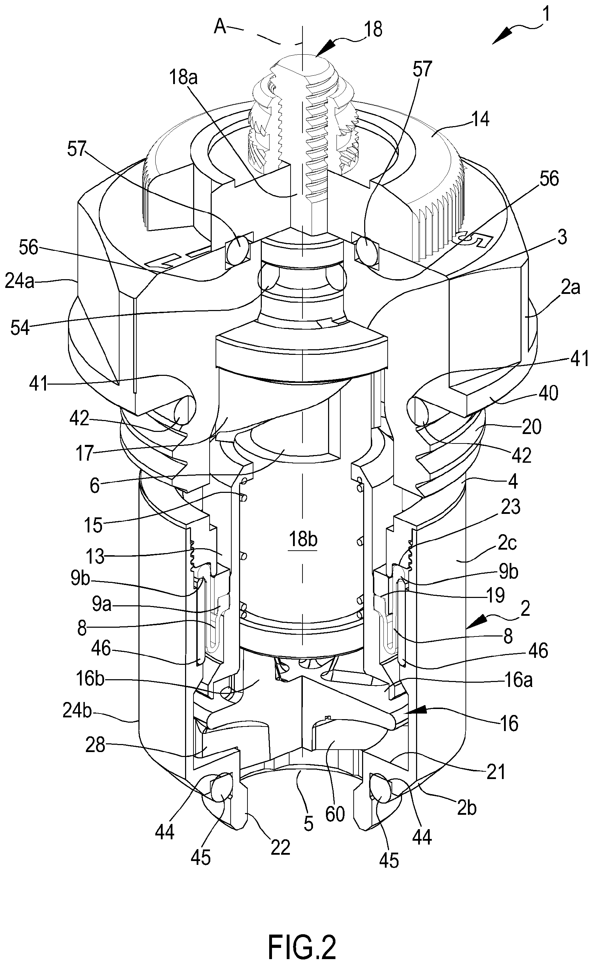

In fact, as for example shown in Figure 3, the transmission member 18 may comprise a hollow portion 18b defining the passage 60 and configured to place the inlet 4 in fluid communication with the outlet 5 of the containment structure 2. The hollow portion 18b may comprise at least one radial access opening 6 in proximity to the top wall 3 and configured to place the hollow portion 18b of the transmission member 18 in fluid communication with the inlet 4 of the containment structure 2. Dimensionally, the access opening 6 has a passage section having, for example, an angular extension between 130° and 170°. Further, the access opening 6 extends axially through a portion of the transmission member, for example extending from the first end portion 2a to the intermediate portion 2c of the containment structure 2. Furthermore, as for example shown in Figures 2 and 3, the access opening 6 has an axial extension of less than 50% of an overall axial extension of the hollow portion 18b along the extension direction A.

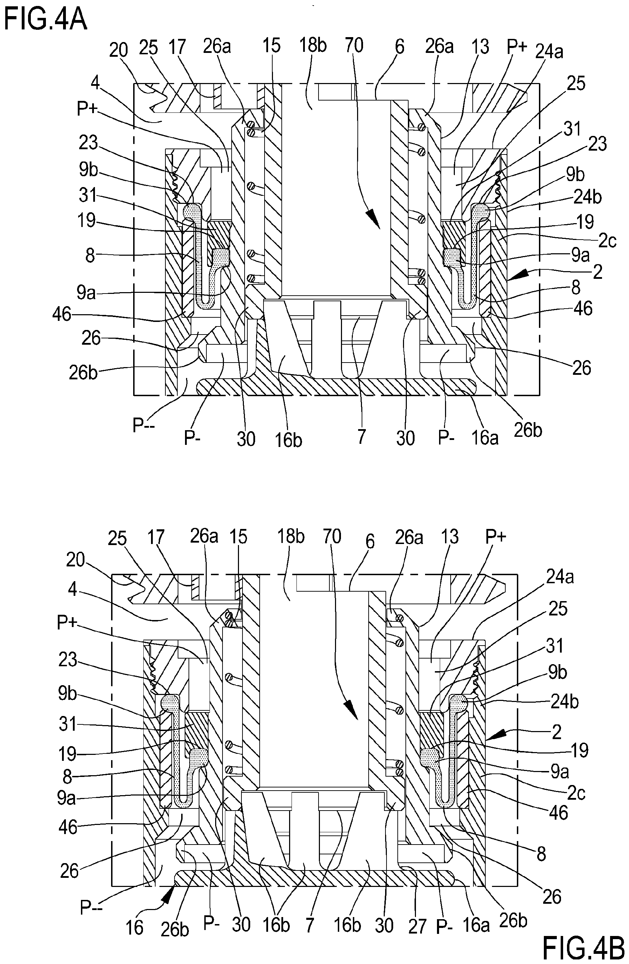

The hollow portion 18b may further comprise an axially exit opening 7 defined at an end of the same hollow portion 18b. In particular, the exit opening 7 faces the outlet 5 of the containment structure 2, and is arranged so as to place in fluid communication the inlet 4 with the outlet 5. As visible in Figures 3, 4A and 4B a flow diverter 16 is interposed between the exit opening 7 and the outlet 5 of the containment structure 2. The terminal end of the hollow portion 18b may have one or more axial grooves, angularly offset from each other by an angle comprised between 20° and 180°, which receive in engagement a plurality of protrusions 16b emerging from the flow diverter 16.

As for example shown in figure 3, the transmission member 18 may further have a control portion 18a which, in the accompanying figures, is positioned on the top part to the hollow portion 18b, configured for allowing a rotation of the transmission member 18 about an axis parallel to the extension direction A. In particular, the control portion 18a emerges from the hollow portion traversing the top wall 3 externally the containment structure, allowing a user to reach the transmission member 18 from outside the containment structure 2. As for example shown in Figure 3, the control portion 18a is fluid-tightly engaged to the top wall 3 of the upper body 24a. In fact, the control portion 18a may have at least one seat 53, having an annular conformation, in which a sealing member 54 may operate, for example an O-ring which is thus radially interposed between the annular seat 53 and the channel crossing the top wall 3 through which the control portion itself is fitted. In fact, the control portion 18a is a rod that allows, from outside the containment structure 2, the movement of the transmission member about the extension direction A and with respect to the containment structure 2, optionally by an angle comprised between 0° and 165°. The transmission member 18, in cooperation with a flow reducer 17 (described in the following), allows to set, from outside the containment structure 2, a predetermined flow rate of the fluid passing through the device 1, which may for example coincide with an expected design flow rate for a line of the plant in which the device itself is fitted. For this purpose, the control portion 18a may further have a coupling surface external to the containment structure 2 and configured to engage with an adjustment ring nut 14 of the device 1. For example, the adjustment ring nut 14 is placed in contact with an external surface of the upper body 24a and in engagement with the transmission member 18. In particular, the adjustment ring nut 14 is integrally engaged with the control portion 18a of the transmission member, at and external to the first end portion 2a of the containment structure 2. The adjustment ring nut 14 may be ratably movable with respect to the containment structure 2, about the extension direction A, allowing angular movement of the transmission member 18 from outside the containment structure 2. In detail, the adjustment ring nut 14 is configured to angularly move the transmission member 18 with respect to the containment structure 2 by an angle comprised between 0° and 165°. As for example shown from figure 1, the adjustment ring nut 14, and optionally also the external surface of the upper body 24a facing the adjustment ring nut 14, may comprise at least one graduated scale configured for allowing a user to set a predetermined rotation of the transmission member 18. The adjustment ring nut 14 comprises in interposition between the adjustment ring nut 14 itself and the external surface of the upper body 24a, a seat 56 in which a sealing organ 57, for example a further O-ring, may operate.

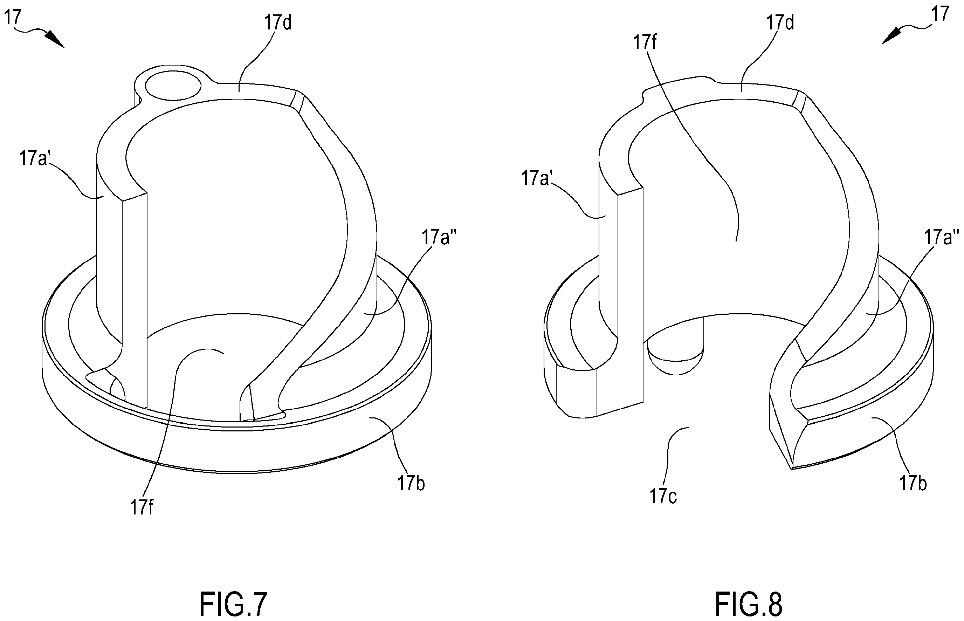

In order to allow a desired fluid passage section size of the access opening 6 to be set, thereby allowing a predetermined nominal flow rate to be set with the adjustment ring nut 14, the device 1 may further comprise at least one flow reducer 17 radially external to the transmission member 18 and operating at the first end portion of the upper body 24a. In particular, the flow reducer 17 cooperates with the hollow portion of the transmission member 18 and allows to occlude at least partially the passage section of the access opening 6 and regulate the fluid flow rate in transit between the inlet 4 and the hollow portion 18b of the transmission member 18. As for example shown in figure 3, the flow reducer 17 if facing on the top part, the lower face of the top wall 3 of the containment structure 2 and it is angularly fixed with respect to the latter. Furthermore, the flow reducer 17 shown in two embodiments in figures 7 and 8, has at least one lateral wall 17a arranged coaxially to the hollow portion 18b of the transmission member, resulting at least partially superimposed to the external lateral surface of the same transmission member and at least partially facing the access opening 6 of the hollow portion 18b so as to reduce its dimensions more or less depending on the relative angular position between the transmission member 18 and the flow reducer 17.

It is worth noting that the lateral wall 17a of the flow reducer 17 is connected on the lower part to a base 17b which in the embodiment of figure 7 has a closed curvilinear perimeter, in particular with circular shape, while in the embodiment of figure 8 it has a curvilinear perimeter (also with circular shape) with an interrupted angular portion defining an angular opening 17c in the base 17b. The solution of figure 8 allows for greater radial deformability of the flow reducer and therefore facilitating the assembly. The lateral wall 17a of the flow reducer emerges from the base 17b and develops angularly with a curved first section 17a' of constant height, followed by a curved second section 17a" having a height that decreases when proceeding angularly (clockwise in figures 7 and 8), connecting an upper edge 17d of the lateral wall 17a with the base 17b. It should be noted that, in both the embodiments of figures 7 and 8, the upper edge 17d of the lateral wall 17a consequently has a flat portion in the form of a circumferential arc (at said first section 17a') followed by a portion reduced towards the base (at the second section 17a"). Eventually, in both the embodiments of figures 7 and 8 (always proceeding clockwise), the lateral wall 17a has a completely open section 17f, which in the case of the embodiment of figure 8 is angularly arranged at the angular opening 17c, and which is interposed between the end of the second section 17a' and the beginning of the first section 17a'. Thanks to the described conformation and, in particular, to the development of the lateral wall and, more precisely, to that of the upper edge 17d of the lateral wall itself, the latter cooperating with the hollow portion 18b defines a fluid passage area of the access opening 6 which is variable according to the relative angular position between the flow reducer 17 and the transmission member 18. According to an optional aspect, the profile of the reduced portion of the upper edge 17d has a parabolic or exponential shape, so as to modify in a known, but non-linear way, the fluid passage section of the access opening 6, following an angular movement of the transmission member 18 with respect to the flow reducer 17. In fact, the movement of the transmission member 18 with respect to the flow reducer 17, allows a user, to set a predetermined value of fluid flow rate at the inlet, for example corresponding to a design flow rate value. Furthermore, the particular shape of the lateral wall of the flow reducer 17, allows the user to set a fine adjustment of the inlet fluid flow rate.

As mentioned above, the device 1 may further comprise at least one flow diverter 16 defined in interposition between the hollow portion 18b of the transmission member 18 and the outlet 5 of the containment structure 2.

As for example shown in figure 3, the flow diverter 16 comprises at least one base body 16a having a discoidal conformation transverse to the extension direction A and facing the exit opening 7 of the hollow portion 18b. The base body 16a is spaced from an inner surface of the containment structure 2, allowing fluid to pass through a perimetral zone radially interposed between the base body 16a and the containment structure.

The flow diverter 16 may further comprise at least a plurality of protrusions 16b axially emerging from the base body 16a. In particular, each protrusion 16b is at least partially counter-shaped and arranged in insertion within a respective groove of the terminal end of the hollow portion 18b. It is also worth noting that the protrusions 16b are angularly offset from each other by an angle comprised between 20° and 180°. In detail, in the embodiment of the invention shown in the accompanying figures, the protrusions 16b are angularly offset from each other by an angle comprised between 30° and 100°. Furthermore, two adjacent protrusions 16b may define a respective radial passage 27 for fluid passing through the exit opening 7 of the hollow portion 18b, so as to place the hollow portion 18b in fluid communication with the outlet 5.

The flow diverter 16 may further have at least one protuberance 60 emerging from the base body 16a on the opposite side with respect to the protrusions 16b, suitable to abut to the containment structure 2. In other words, the protuberance 60 is abutted to the lower wall 21 of the lower body 24b, constraining the axial movement of the flow diverter 16 with respect to the containment structure 2. The protuberance thus places the flow diverter 16 at a predetermined constant distance with respect to the terminal end of the hollow portion 18b.

As for example shown in figure 2, the flow diverter 16 has a plurality of protuberances 60, for example fin-shaped, defining a predetermined number of radial passages 28, each of them in interposition between two adjacent protuberances. In particular, each radial passage 28 extends from a perimeter edge of the base body 16a towards a central area of the same flow diverter 16, in interposition between the base body 16a and the lower wall of the containment structure 2. In fact, the fluid passing through the radial passages 27 of the protrusions 16b, flows, through the radial passages 28, towards the outlet 5 and therefore externally to the containment structure 2.

The device 1 is also provided with a differential pressure regulator 70 comprising a tubular body 13, a spring 15 and an elastic element 8. In particular, the tubular body 13 is arranged coaxially to the transmission member 18 and axially movable with respect to the latter, so as to maintain, in cooperation with the base body 16a of the flow diverter 16 (by modifying the net fluid passage opening), the fluid flow rate between inlet and outlet independently of the pressure difference between the zone at P+ and the zone at P-. As for example shown in the detail figures 4A and 4B, the tubular body 13 extends for a main part of the intermediate portion 2c of the containment structure, in interposition between the inlet 4 and the outlet 5.

The tubular body 13 may further have, at a lower end thereof, a lower shoulder 26b extending radially away from the transmission member 18 and facing the base body 16a of the flow diverter 16, giving the tubular body 13 a substantially cup shape. In particular, the lower shoulder 26b has at least one terminal end which, in cooperation with the flow diverter 16, defines a fluid passage gap in interposition between the same lower shoulder 26b and the base body 16a. As, for example, shown in figures 4a and 4B, the axial movement of the tubular body 13 approaching and moving away from the base body 16a, varies the dimensions of the passage gap, so as to reduce the same passage gap and consequently maintain the flow rate of the fluid in transit through the inlet 4 and the outlet 5 upon variation of the pressure difference between the inlet and the outlet.

The tubular body 13 may further have at least one upper shoulder 26a at an upper end of the same tubular body 13 close to the access opening 6 of the hollow portion 18b. The upper shoulder 26a radially extends approaching to the transmission member 18 to define an abutment surface of an upper end of the spring 15. It is worth noting that the upper shoulder 26a is counter-shaped with the external surface of the hollow portion 18b of the transmission member 18, so as to prevent or limit the transit of fluid in interposition between the same hollow portion 18b and the tubular body 13.

The spring 15 of the differential pressure regulator 70 operates in interposition between the transmission member 18 and the tubular body 13. In particular, the spring 15 is on the lower part engaged to, or acts against, a shoulder 30 of the transmission member 18, the latter extending radially towards the outside for allowing the abutment or the engagement of the same spring 15. Furthermore, the spring 15 is on a top part engaged to, or abutting against, the upper shoulder 26a of the tubular body 13. It is worth noting that the spring 15 has a predetermined elastic preload, configured to prevent compression of the spring 15 when subjected to a force lower than the preload itself. In fact, the spring 15 axially supports the tubular body 13 and prevents its axial movement when the same tubular body 13 is subjected to an axial force directed towards the outlet 5, which is lower than the preload of the spring 15. In turn, the elastic element 8 of the differential pressure regulator 70 operates at the intermediate portion 2c of the containment structure 2, and it is engaged on one side (radially external) to the same containment structure 2 and on one side (radially internal) to the tubular body 13. In particular, the elastic element 8 has a radially inner edge 9a constrained to a seat 19 of the tubular body 13; the seat 19 is defined at an outer surface of the tubular body radially opposite to the radially inner surface of the tubular body itself facing the hollow portion 18b. In fact, the seat 19 is defined in interposition between an outer surface of the tubular body 13 and a collar 31 coaxially engaged to the tubular body 13 itself.

The elastic element 8 further comprises a radially outer edge 9b constrained to a seat 23 defined on the inner surface of the containment structure 2, for example placed in interposition between the upper body 24a, the lower body 24b and a collar coaxially 46 engaged to the lower body 24b. In particular, the collar 46 is suitable for cooperating with the upper body 24a to axially block the radially outer edge 9b of the elastic element 8.

As, for example, shown in figures 4A and 4B, the elastic element 8 delimits, in cooperation with an internal surface of the containment structure 2, a first and a second chamber 25, 26, placed in fluid communication between each other by means of the hollow portion 18b of the transmission member 18. In particular, the first chamber 25 faces the inlet 4 of the containment structure 2, delimited by the internal surface of the containment structure itself, by the elastic element 8 and by the tubular body 13. The second chamber 26 faces instead the outlet 5, in interposition between the elastic element 8 and the flow diverter 16.

It is worth noting that the radially inner edge 9a of the elastic element 8 and the tubular body 13 are axially movable with respect to the containment structure 2 as a function of a pressure difference between the fluid in a higher pressure zone P+ of the first chamber 25 and the fluid in a lower pressure zone P- of the second chamber 26, thus determining (with reference to the accompanying figures) a downward movement of the tubular body 13, namely to reduce the fluid net passage gap exiting the hollow portion 18b, wherein the pressure difference between the P+ zone and the P- zone increase. In particular, the P- zone of influence is the zone underneath the lower end of the tubular body 13 where there is still a relatively high pressure, while further downstream in proximity of the outlet, the pressure becomes much lower and therefore the respective contribution is in fact negligible. As previously mentioned, the elastic element and the tubular body 13 are axially movable if the difference between the forces generated by the pressures insisting on the relative thrust surfaces is higher than the preload value of the spring 15. It is worth noting that also the elastic element 8 has a predetermined elastic stiffness, which is to be considered negligible with respect to the value of elastic stiffness of the spring 15. In other words, the tubular body 13 is axially movable if the pressure difference between the P+ zone of the first chamber 25 and the aforementioned P- zone of the second chamber 26 generates a compression force of the spring 15 sufficiently high to overcome the preload of the spring itself.

As for example shown in figure 3, in use, the fluid enters inside the containment structure through the inlets 4. In detail, part of the incoming fluid wets the first chamber 25, while part of the incoming fluid crosses the passage area of the access opening 6 of the hollow portion 18b. In particular, the fluid crossing the hollow portion 18b, is conveyed, by means of the radial passages 27 of the flow diverter 16, through the passage gap in interposition between the tubular body 13 and the base body 16a. The fluid exiting the passage gap wets the second chamber 26, while, via the radial passages 28 of the flow diverter protuberance 16, it is conveyed towards the outlet 5.

As previously mentioned, the flow rate is preset by rotating the transmission device 18, by means of the adjustment ring nut 14 ring, with respect to the flow reducer 17 in a predetermined angular position in order to set the passage area of the access opening 6. It should be noted that during the operation of the device 1, such angular position between the transmission member 18 and the flow reducer 17 is fixed.

The fluid in the first chamber 25 is at a determined upstream pressure P+, while the fluid in the second chamber 26, due to resistances caused by the flow reducer 17 and especially by means of the variable passage between the flow diverter 16 and the lower portion (inverted cup) of the tubular body 13, is at a downstream pressure P- lower than P+ (in the area below the lower portion of the tubular body 13 and therefore reaches a further and significantly lower pressure P- - downstream the passage between the lower portion of the tubular body 13 and the flow diverter 16.

The upstream pressure P+ acts in the first chamber 25 on the elastic element 8 and on the central portion of the upper surface of the tubular body 13, while the downstream pressure P- - acts substantially on the lower surface of the tubular body 13 (in fact, the pressure P- - generates a negligible force). In detail, to the upstream pressure P+ equals a force acting on the tubular body 13 directed towards the outlet 5; vice versa, to the downstream pressure P- corresponds an opposite force acting on the tubular body 13, which adds to a repulsive force generated by the spring 15. Thanks to an appropriate choice of the dimensions and structure of the various components, the equilibrium of the force generated by the upstream pressure P+ with that generated by the downstream pressure P-, increased by the elastic reaction of the spring 15, substantially determines the axial position of the tubular body 13 with respect to the containment structure and consequently the width of the passage gap, ensuring an output flow at a constant flow rate, independently of the difference in pressure between the inlet and the outlet.

### Manifold 100

It is also an object of the present invention to provide a manifold, in particular a delivery manifold 101, comprising the flow adjustment device 1 according to the above description and/or according to any one of the accompanying claims.

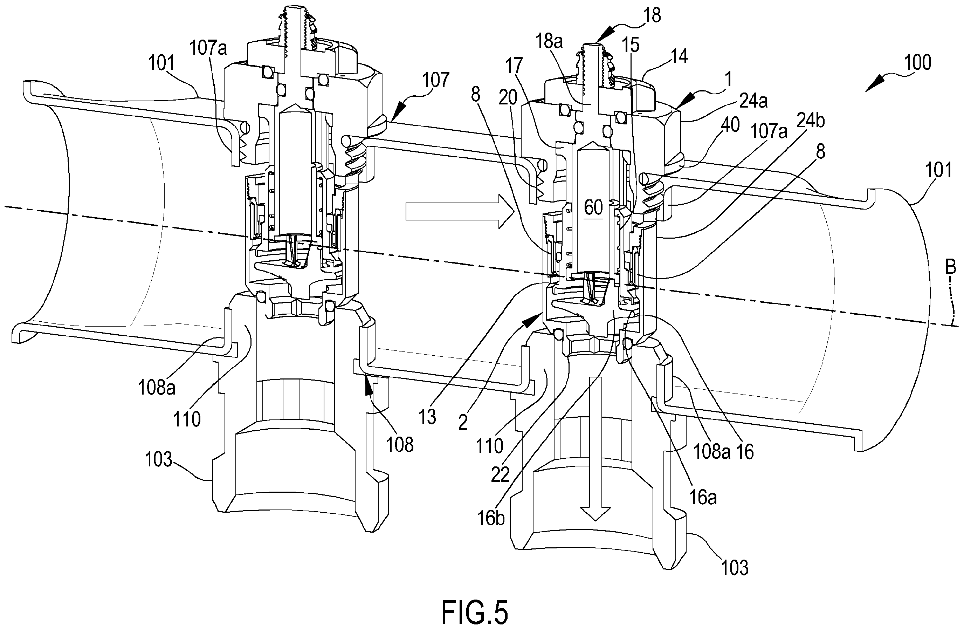

The delivery manifold 101 may comprises a hollow tubular duct extending along an extension direction B transverse to the extension direction A of the flow adjustment device 1. In particular, the hollow tubular duct is configured to supply a fluid (i.e. water) from a supply line 120 and convey it within the containment structure 2 of the flow controller 1. The tubular duct may comprise a first and a second opening 107, 108 aligned with each other along a direction transverse to the extension direction Band configured to engage respective portions/coupling areas of the flow adjuster. In detail, the first opening 107 is configured to fluid-tightly engage with the coupling portion 20 of the upper body 24a of the containment structure. As shown in Figure 5, the first opening 107 has at least one engagement surface 107a configured to fluid-tightly engage with the coupling portion 20 of the containment structure. The engagement surface 107a may further have a threaded portion, so as to define a removable type engagement.

The second opening 108 may be configured to fluid-tightly engage, either directly or after interposition of a connector shank 110 of a distribution circuit 103, at the connection 22 of the lower body 24b. In fact, the second opening 108 may have at least one engagement surface 108a extending internally to the tubular duct, configured to receive in insertion the connection 22 of the containment structure 2 or a connector shank 110 of the distribution circuit 103. In particular, engagement between the engagement surface 108a of the second opening 108 and the connection 22 of the containment structure 2 is achieved by simple abutment, or by insertion of the connection into the second opening or by a quick-connect coupling. It should be noted that, the realization of a threaded coupling at the engagement surface 107a of the first opening and a coupling without threads at the engagement surface 108a of the second opening 108, allows the adjustment device 1 to be installed in the tubular duct of the delivery manifold 101 easily and quickly, for example for retro-fitting operations. In fact, in order to engage the adjustment device to the tubular duct, it is sufficient to screw the adjustment device to the engagement surface 107a of the first opening. In this way, the engagement between the connection 22 and the delivery manifold 101, or the shank of the distribution circuit 103, is automatically achieved.

It is also worth noting that the engagement surface 108 substantially defines an alignment portion for the connector shank 110 of the distribution circuit 103, so as to arrange the shank itself in alignment with the first opening 107 of the tubular duct, along a direction transverse to the extension direction B. The delivery manifold 101 may comprise a plurality of flow adjustment devices 1, each engaged to the tubular conduit at a respective first and/or second opening 107, 108. The delivery manifold 101 may be in fluid communication with a plurality of distribution circuits 103, each associated with a respective flow adjustment device 1.

### Hydraulic plant

It is also an object of the present invention to provide a hydraulic plant 100 comprising a delivery manifold 101 according to one or more of the above-mentioned claims and/or according to the above-mentioned description.

As for example shown in figure 5, the plant 100 may comprise at least one return manifold 102 and at least two distribution circuits 103, the latter having two opposing ends respectively engaged to the delivery manifold 101 and the return manifold 102. In other words, each distribution circuit 103 defines a fluid communication channel between the outlet 5 of the device 1 and the return manifold 102.

In detail, each distribution circuit 103 may include at least one connector shank 110 at each end of the distribution circuit, which allows engagement of the distribution circuit 103 to the delivery manifold 101 and the return manifold 102. Each connector shank 110 may further comprise at least one threaded portion, configured to define a fluid-tight removable engagement with the delivery manifold 101 and the return manifold 102. Each connector shank 110 may further comprise at least one upper opening configured to receive in engagement the connection 22 of the lower body 24b of the device 1. The upper opening may therefore define, in cooperation with the connection 22 of the device 1, a simple abutment engagement or an insertion engagement or quick-connect engagement, realizing a passage in fluid communication between the outlet 5 of the device 1 and the distribution circuit 103.

It is worth noting that the plant 100 comprises a plurality of distribution circuits 103, each for each flow adjustment device installed on the delivery manifold 101. Thus, the distribution circuits 103 allow for a fluid-tight connection between each device 1 in engagement to the delivery manifold 101 with the return manifold 102.

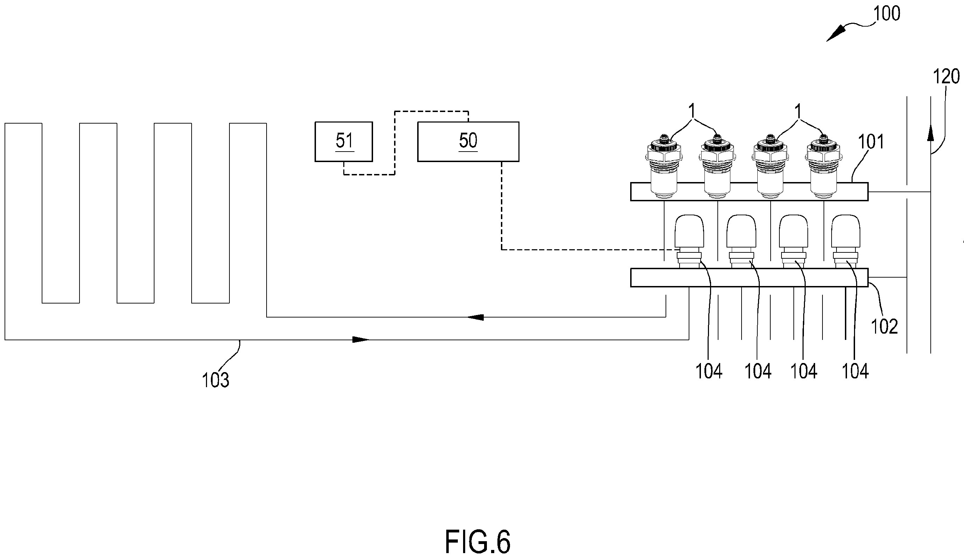

As shown in Figure 6, the plant 100 may comprise at least one fluid shut-off valve 104 engaged, for example, at the return manifold 102 and in fluid communication with a respective distribution circuit 103. In particular, the fluid shut-off valve 104 acts directly on the distribution circuit 103, selectively allowing and/or preventing fluid communication between the same distribution circuit 103 and the return manifold 102. In fact, the fluid shut-off valve 104 is configured to operate in at least an open condition and a closed condition. In the open condition, the valve 104 allows fluid communication between the distribution circuit 103 and the return manifold 102, so as to allow fluid, for example heated fluid, to transit along the distribution circuit 103, heating an environment (a flat or a room). Vice versa, in the closed condition, the valve 104 prevents fluid communication between the distribution circuit 103 and the return manifold 102, so as to interrupt the transit of heated fluid along the distribution circuit 103, for example following the reaching of a threshold temperature present inside the environment to be heated.

It should be noted that the plant 100 preferably comprises a plurality of fluid shut-off valves 104, each of which can be associated with a respective flow adjustment device 1 and in fluid communication with the latter by means of a respective distribution circuit 103. The flow passing within each distribution circuit 103 is thus independently managed by means of a flow regulator 1 and a valve 104. Further, the temperature present within the environment to be heated can also be independently managed. In fact, each combination of control device 1 - distribution circuit 103 - shut-off valve 104 allows independent heating of environment, each of which can be heated at different temperatures.

The plant 100 may further comprise a control unit 50 directly connected to each fluid shut-off valve 104 and configured to control the operating condition of a respective valve 104.

The control unit 50 may further comprise at least one data entry device configured to allow a user of the plant, to enter a threshold temperature value, for example equal to the temperature value at which the user wishes to heat the environment.

The plant 100 may further comprise at least one temperature sensor 51 directly connected to the control unit 50 and configured to measure a temperature value present within the environment to be heated. In particular, the temperature sensor 51 is configured to send a temperature signal representative of the measured temperature value to the control unit 50. The control unit 50 may further be configured to receive the temperature signal emitted by the temperature sensor 51, compare said measured temperature value with the threshold value and consequently command the operating condition of the shut-off valve 104. In particular, the control unit 50 is configured to command the closed condition of the shut-off valve 104 if the temperature value measured by the temperature sensor 51 is greater than the threshold value. In this way, the passage of heated fluid within the environment to be heated can be interrupted and the temperature within the environment itself can be kept constant. On the other hand, the control unit 50 may be configured to control the open condition of the shut-off valve 104 if the measured temperature value is lower than the threshold temperature value, so as to allow the passage of fluid and heating the environment until reaching the set temperature.

### Materials

Each element of the flow adjustment device 1, excluding the elastic element 8 and the O-rings, may be at least partly made of metallic material, for example it may be made using at least one selected from the group of the following metallic materials: steel, brass, bronze, copper and its alloys, aluminum and its alloys. Each element of the flow adjustment device 1, excluding the elastic element 8 and the O-rings, may further be made at least partly (i.e. entirely) of plastic material; for example, it may be made using at least one selected from the group of the following materials: ABS, PPS, PSU, PE, PTFE, PVC, PET. Alternatively, they may be made using either metallic or plastic materials as listed above. The elastic element 8 and the O-rings can instead be made from an elastically deformable material, for example rubber.

The delivery manifold 101 may be at least partially made of metallic material, for example, it may be made using at least one selected from the group of the following metallic materials: steel, brass, bronze, copper and its alloys, aluminum and its alloys. The delivery manifold 101 may further be made at least in part (i.e., entirely) of plastic material; for example, it may be made using at least one selected from the group of the following materials: ABS, PPS, PSU, PE, PTFE, PVC, PET. Alternatively, the delivery manifold 101 may be made using either metallic material or plastic material as listed above. The return manifold 102 and each distribution circuit 103 may be at least partially made of metallic material, for example, they may be made using at least one selected from the group of following metallic materials: steel, brass, bronze, copper and its alloys, aluminum and its alloys. The return manifold 102 and each distribution circuit 103 may further be made at least in part (i.e. entirely) of plastic material; for example, they may be made using at least one selected from the group of the following materials: ABS, PPS, PSU, PE, PTFE, PVC, PET. Alternatively, the return manifold 102 and each distribution circuit 103 may be made using either metal or plastic materials as listed above.

## Claims

1. Flow adjustment device, comprising:
- a containment structure (2) extended along an extension direction (A) between a first and a second end portion (2a, 2b), said containment structure (2) comprising:
∘ at least one top wall (3) at the first end portion (2a);
∘ at least one axial outlet (5) at the second end portion (2b);
∘ at least one radial inlet (4) at an intermediate portion (2c) of the containment structure (2) extended in interposition between the first and the second end portions (2a, 2b);
- a transmission member (18) having a control portion (18a), traversing the top wall (3) of the containment structure (2), and a hollow portion (18b), which defines a passage configured for placing in fluid communication the inlet (4) with the outlet (5) of the containment structure (2) wherein the transmission member (18) is at least rotatably movable, with respect to the containment structure, around the extension direction (A),
wherein the hollow portion (18b) is at the upper part delimited by the control portion (18a);
- a differential pressure regulator (70) operating between said inlet (4) and said outlet (5), wherein the differential pressure regulator (70) operates at the intermediate portion of the containment structure (2), and
wherein the differential pressure regulator (70) comprises:
- a tubular body (13) arranged coaxially with the transmission member (18) and axially movable with respect to the latter; wherein the tubular body (13) extends inside the containment structure (2) for a main part of the intermediate portion (2c) in interposition between the radial inlet (4) and the axial outlet (5);
- a spring (15);
- an elastic element (8) having a radially inner edge (9a) constrained to the tubular body (13) and a radially outer edge (9b) constrained to the containment structure (2);
**characterized in that**
the hollow portion (18b) extends inside the containment structure (2) for a main part of the intermediate portion (2c) of the containment structure (2), and wherein the spring (15) is radially interposed, between the transmission member (18) and the tubular body (13).

2. Device according to claim 1, wherein the hollow portion (18b) of the transmission member (18) comprises:
- at least one radial access opening (6) in proximity to the top wall (3);
- at least one axial exit opening (7) at a terminal end of the hollow portion (18b) facing the outlet (5),
wherein said access and outlet openings (6, 7) of the transmission member (18) are configured for allowing the passage of a fluid from the inlet (4) to the outlet (5) of the containment structure (2); wherein the access opening (6) of the transmission member (18) has a passage section having:
- pre-established angular extension, in particular comprised between 130° and 170°,
- axial extension substantially from the first end portion (2a) to the intermediate portion (2c) of the containment structure (2), optionally equal to less than 50% of an overall axial extension along the extension direction (A) of the transmission member inside the containment structure (2);
wherein the transmission member (18) is at least rotatably movable, with respect to the containment structure, around the extension direction (A), by an angle comprised between 0° and 165°; optionally wherein the terminal end of the hollow portion (18b) has at least one shoulder (30) radially extended towards the outside and configured for allowing the abutment of a lower end of the spring (15).

3. Device according to any one of the preceding claims comprising at least one flow diverter (16) interposed between the differential pressure regulator (70) and the outlet (5);
wherein the flow diverter (16) faces the exit opening (7) of the hollow portion (18b), said flow diverter (16) comprising at least one base body (16a) extended transversely to the extension direction (A) and configured for radially diverting, towards the outside, a fluid flow traversing the hollow portion (18b); and
wherein the base body of the flow diverter (16) is placed at a predetermined constant distance from the terminal end of the hollow portion (18b).

4. Device according to any one of the preceding claims comprising at least one adjustment ring nut (14) operating outside the containment structure (2) in engagement with the transmission member (18);
wherein the adjustment ring nut (14) operates at the first end portion (2a) of the containment structure (2), said adjustment ring nut (14) being engaged with the control portion (18a) of the transmission member (18);
wherein the adjustment ring nut (14) is at least rotatably movable relative to the containment structure, around the extension direction (A);
wherein the adjustment ring nut (14) is fixedly engaged with the transmission member (18), said adjustment ring nut being configured for allowing, from outside the containment structure (2), the movement of the transmission member (18);
optionally, wherein the adjustment ring nut (14) is configured for angularly moving the transmission member (18) relative to the containment structure (2) by an angle comprised between 0° and 165°.

5. Device according to any one of the preceding claims comprising at least one flow reducer (17) radially outside the transmission member (18) and operating at the first end portion of the containment structure (2);
wherein the flow reducer (17) is engaged within the containment structure (2) and at least partly faces the access opening (6) of the hollow portion (18b);
wherein the flow reducer (17) has at least one lateral wall (17a) arranged coaxially with the hollow portion (18b) of the transmission member, resulting at least partially superimposed on the external lateral surface of the same transmission member and at least partly facing the access opening (6) of the hollow portion (18b), so as to more or less reduce the dimensions thereof depending on the relative angular position between transmission member (18) and flow reducer (17).

6. Device according to the preceding claim, wherein the lateral wall (17a) of the flow reducer (17) is on the lower part connected to a base (17b) with closed curvilinear perimeter, in particular with circular shape, or with circular arc curvilinear perimeter having an angular portion interrupted to define an angular opening (17c) in the base (17b);
wherein the lateral wall (17a) of the flow reducer emerges from the base (17b) and is angularly extended with a curved first section (17a') of constant height, followed by a curved second section (17a") having height which is reduced when proceeding angularly, connecting an upper edge (17d) of the lateral wall (17a) with the base (17b),
in particular wherein the upper edge (17d) of the lateral wall (17a) has a flat portion with arc of circumference shape at said first section (17a') followed by a portion descending towards the base at the second section (17a"), the lateral wall (17a) having a completely open section (17f) which is interposed between the end of the second section (17a") and the start of the first section (17a'), wherein the profile of the descending portion of the upper edge (17b) is a non-rectilinear shape, optionally parabolic or exponential, in a manner such to modify in a known but non-linear manner, the fluid passage section of the access opening (6), following an angular movement of the transmission member (18) with respect to the flow reducer (17).

7. Device according to claim 5, in combination with any one of the preceding claims, wherein the tubular body (13) has, at a lower end of the same tubular body (13), a lower shoulder (26b) radially extended away from the transmission member (18) and facing the base body (16a) of the flow diverter (16);
wherein the lower shoulder (26b) has at least one terminal end which, in cooperation with the flow diverter (16), defines a fluid passage opening in interposition between the same lower shoulder (26b) and the base body (16a);
wherein the passage opening has a variable passage section following the movement of the tubular body (13) close to or away from the base body (16a) of the flow diverter (16), said tubular body (13) being configured for modifying the flow rate of the fluid moving between the inlet (4) and the outlet (5).

8. Device according to any one of the preceding claims, wherein the containment structure comprises:
- at least one upper body (24a) extended along the extension direction (A) and defining at least the first end portion (2a) of the containment structure (2);
- at least one lower body (24b) extended along the extension direction (A) and defining at least the second end portion (2b) of the containment structure (2);
wherein said upper and lower bodies (24a, 24b) are engaged with each other with fluid seal, optionally by means of a threaded coupling;
wherein the upper body (24a) has at least one coupling portion (20), optionally threaded, at the first end portion (2a); said coupling portion being configured for allowing the connection with fluid seal of the containment structure (2) to a respective first opening to a delivery manifold (101) of a hydraulic plant (100);
wherein the lower body (24b) has at least one lower wall (21), longitudinally opposite the top wall (3), on which the outlet (5) of the containment structure (2) is defined;
wherein the lower body (24b) comprises at least one connection (22) extended axially starting from the lower wall (21), said connection (22) defining, in cooperation with the lower wall (21), a coupling zone configured for allowing the direct connection, or indirect connection upon interposition of a connector shank, of the containment structure (2) to a respective second opening of a delivery manifold (101) of a hydraulic plant (100);
optionally wherein the upper body (24a) has at least two inlets (4) that are radially opposite each other, each inlet (4) defined on the upper body (24a) having a radial extension comprised between 15° and 175°.

9. Device according to claim 1, in combination with any one of the preceding claims, wherein the elastic element (8) delimits, in cooperation with an internal surface of the containment structure (2):
- a first chamber (25) facing the inlet (4) of the containment structure (2);
- a second chamber (26) facing the outlet (5) of the containment structure (2);
wherein at least the radially inner edge (9a) of the elastic element (8) and the tubular body (13) are axially movable relative to the containment structure (2) as a function of a pressure difference between the fluid in the first camera (25) and the fluid in the upper second chamber (26) greater than at least one preload value of the spring (15);
wherein the first and the second chamber (25, 26) are in fluid communication with each other at least through the hollow portion (18b) of the transmission member;
optionally wherein the elastic element (8) comprises at least one of a rolling membrane and a bellows.

10. Device according to any one of the preceding claims, wherein the hollow portion (18b) is at the upper part delimited by the control portion (18a) and being in one piece with the latter.

11. Delivery manifold for floor heating plants, each plant (100) being of the type comprising at least two fluid distribution circuits (103) configured for placing in fluid communication the delivery manifold (101) and a return manifold,
wherein the delivery manifold (101) comprises:
- at least one tubular duct extended along an extension direction (B) transverse to the extension direction (A),
- at least one flow adjustment device (1) for each of said distribution circuits, each flow adjustment device (1) being in accordance with any one of the preceding claims,
wherein each device (1) is at least partly housable within the tubular duct in order to allow the introduction of fluid through the inlet (4) of the containment structure (2).

12. Manifold according to claim 11, wherein each said device is in accordance with claim 9 and in which the tubular duct comprises:
- at least one first opening (107) configured for being engaged with fluid seal with the coupling portion (20) of the upper body (24a) of the containment structure (2);
- at least one second opening (108) configured for being engaged with fluid seal with a distribution circuit (103),
wherein the first and the second opening (107, 108) are aligned with each other along a direction transverse to the extension direction (B).

13. Hydraulic plant, for example for floor heating, comprising:
- at least one delivery manifold (101) in accordance with any one of the two preceding claims;
- at least one return manifold (102);
- at least two distribution circuits (103) engaged with the tubular duct of the delivery manifold (101) and with the return manifold (102), each said distribution circuit (103) being configured for placing in fluid communication the outlet (5) of a respective device (1) with the return manifold (102).

## Patentansprüche

1. Durchflusseinstellvorrichtung, umfassend:
- eine Einschließungsstruktur (2), die sich entlang einer Erstreckungsrichtung (A) zwischen einem ersten und einem zweiten Endabschnitt (2a, 2b) erstreckt, wobei die Einschließungsstruktur (2) umfasst:
∘ mindestens eine obere Wand (3) an dem ersten Endabschnitt (2a);
∘ mindestens einen axialen Auslass (5) am zweiten Endabschnitt (2b);
∘ mindestens einen radialen Einlass (4) an einem Zwischenabschnitt (2c) der Einschließungsstruktur (2), der sich zwischen dem ersten und dem zweiten Endabschnitt (2a, 2b) erstreckt;
- ein Übertragungselement (18) mit einem Steuerabschnitt (18a), der die obere Wand (3) der Einschließungsstruktur (2) durchquert, und einem hohlen Abschnitt (18b), der einen Durchgang definiert, der so konfiguriert ist, dass er den Einlass (4) mit dem Auslass (5) der Einschließungsstruktur (2) in Fluidverbindung bringt, wobei das Übertragungselement (18) zumindest drehbeweglich im Bezug auf die Einschließungsstruktur um die Erstreckungsrichtung (A) ist;
wobei der hohle Abschnitt (18b) am oberen Teil durch den Steuerabschnitt (18a) begrenzt ist,
- einen Differenzdruckregler (70), der zwischen dem genannten Einlass (4) und dem genannten Auslass (5) arbeitet, wobei der Differenzdruckregler (70) am Zwischenabschnitt der Einschließungsstruktur (2) arbeitet, und
wobei der Differenzdruckregler (70) umfasst:
- einen rohrförmigen Körper (13), der koaxial zu dem Übertragungselement (18) angeordnet und in Bezug auf letzteres axial beweglich ist; wobei sich der rohrförmige Körper (13) innerhalb der Einschließungsstruktur (2) für einen großen Teil des Zwischenabschnitts (2c) zwischen dem radialen Einlass (4) und dem axialen Auslass (5) erstreckt
- eine Feder (15);
- ein elastisches Element (8) mit einem radial inneren Rand (9a), der durch den rohrförmigen Körper (13) begrenzt ist, und einem radial äußeren Rand (9b), der durch die Einschließungsstruktur (2) begrenzt ist;
**dadurch gekennzeichnet, dass**
der hohle Abschnitt (18b) sich innerhalb der Einschließungsstruktur (2) für einen großen Teil des Zwischenabschnitts (2c) erstreckt und wobei die Feder (15) zwischen dem Übertragungselement (18) und dem rohrförmigen Körper (13) radial angeordnet ist.

2. Vorrichtung nach Anspruch 1, wobei der hohle Abschnitt (18b) des Übertragungselements (18) umfasst:
- mindestens eine radiale Zugangsöffnung (6) in der Nähe der oberen Wand (3);
- mindestens eine axiale Auslassöffnung (7) an einem dem Auslass (5) zugewandten Ende des hohlen Abschnitts (18b),
wobei die Zugangs- und Auslassöffnungen (6, 7) des Übertragungselements (18) so konfiguriert sind, dass sie den Durchgang eines Fluids vom Einlass (4) zum Auslass (5) der Einschließungsstruktur (2) ermöglichen; wobei die Zugangsöffnung (6) des Übertragungselements (18) einen Durchgangsabschnitt aufweist, der umfasst
- eine vorgegebene Winkelausdehnung, die insbesondere zwischen 130° und 170° liegt,
- eine axiale Erstreckung im Wesentlichen vom ersten Endabschnitt (2a) bis zum Zwischenabschnitt (2c) der Einschließungsstruktur (2), die optional weniger als 50 % einer gesamten axialen Erstreckung entlang der Erstreckungsrichtung (A) des Übertragungselements innerhalb der Einschließungsstruktur (2) beträgt;
wobei das Übertragungselement (18) in Bezug auf die Einschließungsstruktur zumindest um die Erstreckungsrichtung (A) drehbar beweglich ist, um einen Winkel zwischen 0° und 165°; optional wobei das Abschlussende des hohlen Abschnitts (18b) zumindest eine Schulter (30) aufweist, die sich radial nach außen erstreckt und so konfiguriert ist, dass sie das Anschlagen eines unteren Endes der Feder (15) ermöglicht.

3. Vorrichtung nach einem der vorhergehenden Ansprüche, die mindestens einen Strömungsumlenker (16) aufweist, der zwischen dem Differenzdruckregler (70) und dem Auslass (5) angeordnet ist;
wobei der Strömungsumlenker (16) der Austrittsöffnung (7) des hohlen Abschnitts (18b) zugewandt ist, wobei der Strömungsumlenker (16) mindestens einen Grundkörper (16a) aufweist, der sich quer zur Erstreckungsrichtung (A) erstreckt und zum radialen Umlenken einer den hohlen Abschnitt (18b) durchquerenden Fluidströmung nach außen ausgebildet ist; und
wobei der Grundkörper des Strömungsumlenkers (16) in einem vorbestimmten konstanten Abstand von dem Abschlussende des hohlen Abschnitts (18b) angeordnet ist.

4. Vorrichtung nach einem der vorhergehenden Ansprüche, die mindestens eine Einstellringmutter (14) umfasst, die außerhalb der Einschließungsstruktur (2) in Eingriff mit dem Übertragungselement (18) arbeitet;
wobei die Einstellringmutter (14) am ersten Endabschnitt (2a) der Einschließungsstruktur (2) wirkt, wobei die Einstellringmutter (14) mit dem Steuerabschnitt (18a) des Übertragungselements (18) in Eingriff steht;
wobei die Einstellringmutter (14) zumindest drehbar relativ zu der Einschließungsstruktur um die Ausdehnungsrichtung (A) beweglich ist;
wobei die Einstellringmutter (14) fest mit dem Übertragungselement (18) in Eingriff steht, wobei die Einstellringmutter so konfiguriert ist, dass sie von außerhalb der Einschließungsstruktur (2) die Bewegung des Übertragungselements (18) ermöglicht;
optional, wobei die Einstellringmutter (14) so konfiguriert ist, dass sie das Übertragungselement (18) relativ zu der Einschließungsstruktur (2) um einen Winkel zwischen 0° und 165° winklig bewegt.

5. Vorrichtung nach einem der vorhergehenden Ansprüche, die mindestens einen Strömungsreduzierer (17) aufweist, der sich radial außerhalb des Übertragungselements (18) befindet und am ersten Endabschnitt der Einschließungsstruktur (2) arbeitet;
wobei der Strömungsreduzierer (17) innerhalb der Einschließungsstruktur (2) in Eingriff steht und zumindest teilweise der Zugangsöffnung (6) des hohlen Abschnitts (18b) zugewandt ist;
wobei der Strömungsreduzierer (17) mindestens eine Seitenwand (17a) aufweist, die koaxial mit dem hohlen Abschnitt (18b) des Übertragungselements angeordnet ist, so dass sie zumindest teilweise die äußere Seitenfläche desselben Übertragungselements überlagert und zumindest teilweise der Zugangsöffnung (6) des hohlen Abschnitts (18b) zugewandt ist, um dessen Abmessungen in Abhängigkeit von der relativen Winkelposition zwischen dem Übertragungselement (18) und dem Strömungsreduzierer (17) mehr oder weniger zu verringern.

6. Vorrichtung nach dem vorhergehenden Anspruch, bei der die Seitenwand (17a) des Strömungsreduzierers (17) am unteren Teil mit einer Basis (17b) mit geschlossenem gekrümmten Umfang, insbesondere mit kreisförmiger Form, oder mit kreisbogenförmigem gekrümmten Umfang verbunden ist, der einen winkeligen Abschnitt aufweist, der unterbrochen ist, um eine winkelige Öffnung (17c) in der Basis (17b) zu definieren;
wobei die Seitenwand (17a) des Strömungsreduzierers von der Basis (17b) ausgeht und sich winkelförmig mit einem gekrümmten ersten Abschnitt (17a') mit konstanter Höhe erstreckt, gefolgt von einem gekrümmten zweiten Abschnitt (17a") mit einer Höhe, die sich verringert, wenn man winkelförmig fortschreitet, und einen oberen Rand (17d) der Seitenwand (17a) mit der Basis (17b) verbindet,
insbesondere wobei der obere Rand (17d) der Seitenwand (17a) einen flachen Abschnitt mit bogenförmiger Form des Umfangs an dem ersten Abschnitt (17a') aufweist, gefolgt von einem zur Basis hin abfallenden Abschnitt an dem zweiten Abschnitt (17a"), wobei die Seitenwand (17a) einen vollständig offenen Abschnitt (17f) aufweist, der zwischen dem Ende des zweiten Abschnitts (17a") und dem Beginn des ersten Abschnitts (17a') angeordnet ist, wobei das Profil des abfallenden Abschnitts der oberen Kante (17b) eine nicht geradlinige, vorzugsweise parabolische oder exponentielle Form aufweist, so dass der Fluiddurchgangsabschnitt der Zugangsöffnung (6) in bekannter, aber nicht-linearer Weise verändert wird, und zwar infolge einer Winkelbewegung des Übertragungselements (18) in Bezug auf den Strömungsreduzierer (17).

7. Vorrichtung nach Anspruch 5 in Kombination mit einem der vorhergehenden Ansprüche, wobei der rohrförmige Körper (13) an einem unteren Ende desselben rohrförmigen Körpers (13) eine untere Schulter (26b) aufweist, die sich radial von dem Übertragungselement (18) weg erstreckt und dem Grundkörper (16a) des Strömungsumlenkers (16) zugewandt ist;
wobei die untere Schulter (26b) mindestens ein abschließendes Ende aufweist, das im Zusammenwirken mit dem Strömungsumlenker (16) eine Fluiddurchgangsöffnung definiert, die zwischen der gleichen unteren Schulter (26b) und dem Grundkörper (16a) angeordnet ist;
wobei die Durchgangsöffnung einen variablen Durchgangsquerschnitt aufweist, der der Bewegung des rohrförmigen Körpers (13) in die Nähe des Grundkörpers (16a) des Strömungsumlenkers (16) oder von diesem weg folgt, wobei der rohrförmige Körper (13) so konfiguriert ist, dass er die Durchflussrate des sich zwischen dem Einlass (4) und dem Auslass (5) bewegenden Fluids verändert.

8. Vorrichtung nach einem der vorhergehenden Ansprüche, wobei die Einschließungsstruktur umfasst:
- mindestens einen oberen Körper (24a), der sich entlang der Erstreckungsrichtung (A) erstreckt und mindestens den ersten Endabschnitt (2a) der Einschließungsstruktur (2) definiert;
- mindestens einen unteren Körper (24b), der sich entlang der Erstreckungsrichtung (A) erstreckt und mindestens den zweiten Endabschnitt (2b) der Einschließungsstruktur (2) bildet;
wobei der obere und der untere Körper (24a, 24b) mit einer Fluiddichtung miteinander in Eingriff stehen, vozugsweise mittels einer Gewindekupplung;
wobei der obere Körper (24a) mindestens einen Kupplungsabschnitt (20), der optional mit einem Gewinde versehen ist, an dem ersten Endabschnitt (2a) aufweist; wobei der Kupplungsabschnitt so konfiguriert ist, dass er die Verbindung der Einschließungsstruktur (2) mit einer Fluiddichtung mit einer entsprechenden ersten Öffnung zu einem Zufuhrverteiler (101) einer Hydraulikanlage (100) ermöglicht;
wobei der untere Körper (24b) mindestens eine untere Wand (21) aufweist, die der oberen Wand (3) in Längsrichtung gegenüberliegt, an der der Auslass (5) der Einschließungsstruktur (2) definiert ist;
wobei der untere Körper (24b) mindestens einen Anschluss (22) umfasst, der sich axial ausgehend von der unteren Wand (21) erstreckt, wobei der Anschluss (22) im Zusammenwirken mit der unteren Wand (21) einen Kupplungsbereich definiert, der so konfiguriert ist, dass er die direkte Verbindung oder die indirekte Verbindung nach Zwischenschaltung eines Verbinderschafts der Einschließungsstruktur (2) mit einer entsprechenden zweiten Öffnung eines Förderverteilers (101) einer Hydraulikanlage (100) ermöglicht;
optional, wobei der obere Körper (24a) mindestens zwei Einlässe (4) aufweist, die einander radial gegenüberliegen, wobei jeder Einlass (4), der an dem oberen Körper (24a) definiert ist, eine radiale Ausdehnung zwischen 15° und 175° aufweist.

9. Vorrichtung nach Anspruch 1 in Kombination mit irgendeinem der vorhergehenden Ansprüche, wobei das elastische Element (8) im Zusammenwirken mit einer Innenfläche der Einschließungsstruktur (2):
- eine erste Kammer (25), die dem Einlass (4) der Aufnahmestruktur (2) zugewandt ist;
- eine zweite Kammer (26), die dem Auslass (5) der Einschließungsstruktur (2) zugewandt ist; begrenzt,
wobei zumindest der radial innere Rand (9a) des elastischen Elements (8) und der rohrförmige Körper (13) in Abhängigkeit von einer Druckdifferenz zwischen dem Fluid in der ersten Kammer (25) und dem Fluid in der oberen zweiten Kammer (26), die größer als zumindest ein Vorspannungswert der Feder (15) ist, relativ zu der Einschließungsstruktur (2) axial beweglich sind
wobei die erste und die zweite Kammer (25, 26) zumindest durch den hohlen Abschnitt (18b) des Übertragungselements in Fluidverbindung miteinander stehen;
optional, wobei das elastische Element (8) zumindest eine Rollmembran oder einen Balg umfasst.

10. Vorrichtung nach einem der vorhergehenden Ansprüche, bei der der hohle Abschnitt (18b) am oberen Teil durch den Steuerabschnitt (18a) begrenzt und mit diesem einstückig ausgeführt ist.

11. Verteiler für Fußbodenheizungsanlagen, wobei jede Anlage (100) von dem Typ ist, der mindestens zwei Fluidverteilungskreise (103) umfasst, die so konfiguriert sind, dass sie den Verteiler (101) und einen Rücklaufverteiler in Fluidverbindung bringen,
wobei der Zufuhrverteiler (101) umfasst:
- mindestens eine rohrförmige Leitung, die sich entlang einer Erstreckungsrichtung (B) quer zur Erstreckungsrichtung (A) erstreckt,
- mindestens eine Strömungseinstellvorrichtung (1) für jeden der Verteilerkreise, wobei jede Strömungseinstellvorrichtung (1) einem der vorhergehenden Ansprüche entspricht, wobei jede Vorrichtung (1) zumindest teilweise in der rohrförmigen Leitung untergebracht werden kann, um die Einführung von Fluid durch den Einlass (4) der Einschließungsstruktur (2) zu ermöglichen.

12. Verteiler nach Anspruch 11, bei dem jede Vorrichtung gemäß Anspruch 9 ist und bei dem die rohrförmige Leitung umfasst
- mindestens eine erste Öffnung (107), die so konfiguriert ist, dass sie mit dem Kupplungsabschnitt (20) des oberen Körpers (24a) der Einschließungsstruktur (2) fluiddicht in Eingriff steht;
- mindestens eine zweite Öffnung (108), die so konfiguriert ist, dass sie fluiddicht mit einem Verteilerkreis (103) in Eingriff steht,
wobei die erste und die zweite Öffnung (107, 108) entlang einer Richtung quer zur Erstreckungsrichtung (B) zueinander ausgerichtet sind.

13. Hydraulische Anlage, z.B. für Fußbodenheizungen, umfassend:
- mindestens einen Vorlaufverteiler (101) nach einem der beiden vorhergehenden Ansprüche;
- mindestens einen Rücklaufverteiler (102);
- mindestens zwei Verteilerkreisläufe (103), die mit der rohrförmigen Leitung des Vorlaufverteilers (101) und mit dem Rücklaufverteiler (102) verbunden sind, wobei jeder Verteilerkreislauf (103) so konfiguriert ist, dass er den Ausgang (5) einer entsprechenden Vorrichtung (1) mit dem Rücklaufverteiler (102) in Fluidverbindung bringt.

## Revendications

1. Dispositif d'ajustement de flux, comprenant :
- une structure de confinement (2) étendue le long d'un sens d'extension (A) entre une première et une seconde portion d'extrémité (2a, 2b), ladite structure de confinement (2) comprenant :
∘ au moins une paroi supérieure (3) au niveau de la première portion d'extrémité (2a) ;
∘ au moins un orifice de sortie (5) axial au niveau de la seconde portion d'extrémité (2b) ;
∘ au moins un orifice d'entrée (4) radial au niveau d'une portion intermédiaire (2c) de la structure de confinement (2) étendue en interposition entre la première et la seconde portion d'extrémité (2a, 2b) ;
- un élément de transmission (18) ayant une portion de commande (18a), traversant la paroi supérieure (3) de la structure de confinement (2), et une portion creuse (18b), qui définit un passage conçu pour placer en communication fluidique l'orifice d'entrée (4) avec l'orifice de sortie (5) de la structure de confinement (2), l'élément de transmission (18) étant au moins mobile par rotation, par rapport à la structure de confinement, autour du sens d'extension (A),
la portion creuse (18b) se trouvant au niveau de la partie supérieure délimitée par la portion de commande (18a) ;
- un régulateur de pression différentielle (70) fonctionnant entre ledit orifice d'entrée (4) et ledit orifice de sortie (5), le régulateur de pression différentielle (70) fonctionnant au niveau de la portion intermédiaire de la structure de confinement (2), et
le régulateur de pression différentielle (70) comprenant :
- un corps tubulaire (13) disposé coaxialement par rapport à l'élément de transmission (18) et axialement mobile par rapport à ce dernier ; le corps tubulaire (13) s'étendant à l'intérieur de la structure de confinement (2) pour une partie principale de la portion intermédiaire (2c) en interposition entre l'orifice d'entrée radial (4) et l'orifice de sortie axial (5) ;
- un ressort (15) ;
- un élément élastique (8) ayant un bord radialement interne (9a) contraint au corps tubulaire (13) et un bord radialement externe (9b) contraint à la structure de confinement (2) ;
**caractérisé en ce que**
la portion creuse (18b) s'étend à l'intérieur de la structure de confinement (2) pour une partie principale de la portion intermédiaire (2c) de la structure de confinement (2), et le ressort (15) étant radialement interposé, entre l'élément de transmission (18) et le corps tubulaire (13).

2. Dispositif selon la revendication 1, la portion creuse (18b) de l'élément de transmission (18) comprenant :
- au moins une ouverture d'accès radiale (6) à proximité de la paroi supérieure (3) ;
- au moins une ouverture de sortie axiale (7) au niveau d'une extrémité terminale de la portion creuse (18b) faisant face à l'orifice de sortie (5),
lesdites ouvertures d'accès et d'orifice de sortie (6, 7) de l'élément de transmission (18) étant conçues pour permettre le passage d'un fluide depuis l'orifice d'entrée (4) vers l'orifice de sortie (5) de la structure de confinement (2) ;
l'ouverture d'accès (6) de l'élément de transmission (18) ayant une section de passage ayant :
- une extension angulaire préétablie, en particulier comprise entre 130° et 170°,
- une extension axiale sensiblement depuis la première portion d'extrémité (2a) vers la portion intermédiaire (2c) de la structure de confinement (2), éventuellement égale à moins de 50 % d'une extension axiale globale le long du sens d'extension (A) de l'élément de transmission à l'intérieur de la structure de confinement (2) ;
l'élément de transmission (18) étant au moins mobile par rotation, par rapport à la structure de confinement, autour du sens d'extension (A), d'un angle compris entre 0° et 165° ;
éventuellement l'extrémité terminale de la portion creuse (18b) ayant au moins un épaulement (30) radialement étendu vers l'extérieur et conçu pour permettre la butée d'une extrémité inférieure du ressort (15).

3. Dispositif selon l'une quelconque des revendications précédentes comprenant au moins un déflecteur de flux (16) interposé entre le régulateur de pression différentielle (70) et l'orifice de sortie (5) ;
le déflecteur de flux (16) faisant face à l'ouverture de sortie (7) de la portion creuse (18b), ledit déflecteur de flux (16) comprenant au moins un corps de base (16a) étendu transversalement par rapport au sens d'extension (A) et conçu pour dévier radialement, vers l'extérieur, un flux de fluide traversant la portion creuse (18b) ; et
le corps de base du déflecteur de flux (16) étant placé à une distance constante prédéterminée de l'extrémité terminale de la portion creuse (18b).

4. Dispositif selon l'une quelconque des revendications précédentes comprenant au moins un écrou à oeillet d'ajustement (14) fonctionnant à l'extérieur de la structure de confinement (2) en engagement avec l'élément de transmission (18) ;
l'écrou à oeillet d'ajustement (14) fonctionnant au niveau de la première portion d'extrémité (2a) de la structure de confinement (2), ledit écrou à oeillet d'ajustement (14) étant engagé avec la portion de commande (18a) de l'élément de transmission (18) ;
l'écrou à oeillet d'ajustement (14) étant au moins mobile par rotation par rapport à la structure de confinement, autour du sens d'extension (A) ;
l'écrou à oeillet d'ajustement (14) étant engagé de manière fixe avec l'élément de transmission (18), ledit écrou à oeillet d'ajustement étant conçu pour permettre, depuis l'extérieur de la structure de confinement (2), le mouvement de l'élément de transmission (18) ;
éventuellement, l'écrou à oeillet d'ajustement (14) étant conçu pour déplacer de manière angulaire l'élément de transmission (18) par rapport à la structure de confinement (2) selon un angle compris entre 0° et 165°.

5. Dispositif selon l'une quelconque des revendications précédentes comprenant au moins un réducteur de flux (17) radialement à l'extérieur de l'élément de transmission (18) et fonctionnant au niveau de la première portion d'extrémité de la structure de confinement (2) ;
le réducteur de flux (17) étant engagé à l'intérieur de la structure de confinement (2) et faisant face au moins partiellement à l'ouverture d'accès (6) de la portion creuse (18b) ;
le réducteur de flux (17) ayant au moins une paroi latérale (17a) disposée coaxialement avec la portion creuse (18b) de l'élément de transmission, résultant au moins partiellement surimposé sur la surface latérale externe du même élément de transmission et faisant face au moins partiellement à l'ouverture d'accès (6) de la portion creuse (18b), afin de réduire plus ou moins ses dimensions en fonction de la position angulaire relative entre l'élément de transmission (18) et le réducteur de flux (17).

6. Dispositif selon la revendication précédente, la paroi latérale (17a) du réducteur de flux (17) se trouvant sur la partie inférieure raccordée à une base (17b) avec un périmètre curviligne fermé, en particulier avec une forme circulaire, ou avec un périmètre curviligne en arc circulaire ayant une portion angulaire interrompue pour définir une ouverture angulaire (17c) dans la base (17b) ;
la paroi latérale (17a) du réducteur de flux émergeant de la base (17b) et étant étendue de manière angulaire avec une première section (17a') incurvée de hauteur constante, suivie d'une seconde section (17a") incurvée ayant une hauteur qui est réduite lorsqu'elle se développe de manière angulaire, raccordant un bord supérieur (17d) de la paroi latérale (17a) avec la base (17b),
en particulier le bord supérieur (17d) de la paroi latérale (17a) ayant une portion plate avec un arc d'une forme de circonférence au niveau de ladite première section (17a') suivie d'une portion descendante vers la base au niveau de la seconde section (17a"), la paroi latérale (17a) ayant une section entièrement ouverte (17f) qui est interposée entre l'extrémité de la seconde section (17a") et le début de la première section (17a'), le profil de la portion descendante du bord supérieur (17b) étant une forme non rectiligne, éventuellement parabolique ou exponentielle, d'une manière permettant de modifier d'une manière connue même non linéaire, la section de passage de fluide de l'ouverture d'accès (6), suite à un mouvement angulaire de l'élément de transmission (18) par rapport au réducteur de flux (17).

7. Dispositif selon la revendication 5, en combinaison avec l'une quelconque des revendications précédentes, le corps tubulaire (13) ayant, au niveau d'une extrémité inférieure du même corps tubulaire (13), un épaulement inférieur (26b) radialement étendu à l'opposé de l'élément de transmission (18) et faisant face au corps de base (16a) du déflecteur de flux (16) ;
l'épaulement inférieur (26b) ayant au moins une extrémité terminale qui, en coopération avec le déflecteur de flux (16), définit une ouverture de passage de fluide en interposition entre le même épaulement inférieur (26b) et le corps de base (16a) ;
l'ouverture de passage ayant une section de passage variable suite au mouvement du corps tubulaire (13) près ou à l'opposé du corps de base (16a) du déflecteur de flux (16), ledit corps tubulaire (13) étant conçu pour modifier le débit d'écoulement du fluide se déplaçant entre l'orifice d'entrée (4) et l'orifice de sortie (5).

8. Dispositif selon l'une quelconque des revendications précédentes, la structure de confinement comprenant :
- au moins un corps supérieur (24a) étendu le long du sens d'extension (A) et définissant au moins la première portion d'extrémité (2a) de la structure de confinement (2) ;
- au moins un corps inférieur (24b) étendu le long du sens d'extension (A) et définissant au moins la seconde portion d'extrémité (2b) de la structure de confinement (2) ;
lesdits corps supérieur et inférieur (24a, 24b) étant engagés l'un par rapport à l'autre avec un joint d'étanchéité, éventuellement à l'aide d'un accouplement fileté ;
le corps supérieur (24a) ayant au moins une portion d'accouplement (20), éventuellement filetée, au niveau de la première portion d'extrémité (2a) ; ladite portion d'accouplement étant conçue pour permettre le raccordement avec le joint d'étanchéité de la structure de confinement (2) à une première ouverture respective à une rampe de distribution (101) d'une installation hydraulique (100) ;
le corps inférieur (24b) ayant au moins une paroi inférieure (21), longitudinalement opposée à la paroi supérieure (3), sur laquelle l'orifice de sortie (5) de la structure de confinement (2) est défini ;
le corps inférieur (24b) comprenant au moins un raccordement (22) étendu axialement en commençant depuis la paroi inférieure (21), ledit raccordement (22) définissant, en coopération avec la paroi inférieure (21), une zone d'accouplement conçue pour permettre le raccordement direct, ou le raccordement indirect à l'issue de l'interposition d'une tige de connecteur, de la structure de confinement (2) à une seconde ouverture respective d'une rampe de distribution (101) d'une installation hydraulique (100) ;
éventuellement le corps supérieur (24a) ayant au moins deux orifices d'entrée (4) qui sont radialement opposés l'un par rapport à l'autre, chaque orifice d'entrée (4) défini sur le corps supérieur (24a) ayant une extension radiale comprise entre 15° et 175°.

9. Dispositif selon la revendication 1, en combinaison avec l'une quelconque des revendications précédentes, l'élément élastique (8) délimitant, en coopération avec une surface interne de la structure de confinement (2) :
- une première chambre (25) faisant face à l'orifice d'entrée (4) de la structure de confinement (2) ;
- une seconde chambre (26) faisant face à l'orifice de sortie (5) de la structure de confinement (2) ;
au moins le bord radialement interne (9a) de l'élément élastique (8) et le corps tubulaire (13) étant axialement mobiles par rapport à la structure de confinement (2) comme une fonction d'une différence de pression entre le fluide dans la première chambre (25) et le fluide dans la seconde chambre (26) supérieure plus grande d'au moins une valeur de précharge du ressort (15) ;
la première et la seconde chambre (25, 26) se trouvant en communication fluidique l'une avec l'autre au moins à travers la portion creuse (18b) de l'élément de transmission ;
éventuellement l'élément élastique (8) comprenant au moins l'un d'une membrane de roulement et d'un soufflet.

10. Dispositif selon l'une quelconque des revendications précédentes, la portion creuse (18b) se trouvant au niveau de la partie supérieure délimitée par la portion de commande (18a) et étant solidaire de cette dernière.

11. Rampe de distribution pour installations de chauffage de plancher, chaque installation (100) étant du type comprenant au moins deux circuits de distribution de fluide (103) conçus pour placer en communication fluidique la rampe de distribution (101) et une rampe de retour,
la rampe de distribution (101) comprenant :
- au moins un conduit tubulaire étendu le long d'un sens d'extension (B) transversal au sens d'extension (A),
- au moins un dispositif d'ajustement de flux (1) pour chacun desdits circuits de distribution, chaque dispositif d'ajustement de flux (1) selon l'une quelconque des revendications précédentes,
chaque dispositif (1) pouvant être au moins partiellement logé à l'intérieur du conduit tubulaire afin de permettre l'introduction de fluide à travers l'orifice d'entrée (4) de la structure de confinement (2).

12. Rampe selon la revendication 11, chaque dit dispositif étant selon la revendication 9 et dans lequel le conduit tubulaire comprend :
- au moins une première ouverture (107) conçue pour être engagée avec un joint d'étanchéité avec la portion d'accouplement (20) du corps supérieur (24a) de la structure de confinement (2) ;
- au moins une seconde ouverture (108) conçue pour être engagée avec un joint d'étanchéité avec un circuit de distribution (103),
la première et la seconde ouverture (107, 108) étant alignées l'une par rapport à l'autre le long d'un sens transversal au sens d'extension (B).

13. Installation hydraulique, par exemple pour le chauffage du sol, comprenant :
- au moins une rampe de distribution (101) selon l'une quelconque des deux revendications précédentes ;
- au moins une rampe de retour (102) ;
- au moins deux circuits de distribution (103) engagés avec le conduit tubulaire de la rampe de distribution (101) et avec la rampe de retour (102), chaque dit circuit de distribution (103) étant conçu pour placer en communication fluidique l'orifice de sortie (5) d'un dispositif (1) respectif avec la rampe de retour (102).
